Europäisches Patentamt

European Patent Office

Office européen des brevets

(11) Veröffentlichungsnummer: 0 215 204
A1

## EUROPÄISCHE PATENTANMELDUNG

(21) Anmeldenummer: 86108593.4

(22) Anmeldetag: 24.06.86

(51) Int. Cl.⁴: G 01 N 3/30

(30) Priorität: 24.06.85 PL 254145

(43) Veröffentlichungstag der Anmeldung: 25.03.87
Patentblatt 87/13

(84) Benannte Vertragsstaaten: AT DE GB

(71) Anmelder: Gwarectwo Mechanizacji Gornictwa
"POLMAG", Centrum Mechanizacji Gornictwa
"KOMAG", ul. Pszczynska 37, 44-101 Gliwice (PL)

(72) Erfinder: Orlacz, Jan, ul Sklodowskiej 14, 44-100 Gliwice
(PL)
Erfinder: Kowalczyk, Kazimierz, M.M.Eng., ul.
Saperów 84/15, 05-153 Kazun Nowy (PL)
Erfinder: Krzewinski, Roman, Dr. Civ. Eng., ul.
Duracza 4A, 01-874 Warszawa (PL)
Erfinder: Skoczynski, Wojciech, M.Min.Eng., ul.
Boleslawa Chrobrego 43, 40-881 Katowice (PL)
Erfinder: Spychala, Andrzej, Asst. Prof. Dr. Civ. Eng., ul.
Kossutha 12, 00-001 Warszawa (PL)
Erfinder: Trebinski, Radoslaw, Dr. Eng. Phys., ul.
Rozlogi 2, 01-310 Warszawa (PL)
Erfinder: Wlodarczyk, Edward, Asst. Prof. Dr. Mech.
Eng., ul. Mendelejewa 27, 01-482 Warszawa (PL)
Erfinder: Zielinski, Mieczyslaw, Dr. El. Eng., ul.
Goplanska 29, 02-954 Warszawa (PL)

(74) Vertreter: Eitle, Werner, Dipl.-Ing. et al, Hoffmann, Eitle
& Partner Patentanwälte Arabellastrasse 4,
D-8000 München 81 (DE)

(54) Generator dynamischer Belastungen mittels Explosivstoffen.

(57) Die Erfindung betrifft das Problem der Erzeugung von sprunghaften Probebelastungen in der Struktur von Maschinen. Dieses Problem wird durch Entwicklung des erfindungsgemäßen Generators mit einem Zylinder (2) mit verschiebbarem Kolben (1) und einer Kammer zur Einfüllung des Sprengstoffes gelöst: Die Verbrennungskammer (11) ist am Ende des Zylinders (2) in dem Körper (3) des Generators untergebracht und reicht über den Querumriß des Zylinders (2) hinaus. Die Symmetrieachse (12) der Verbrennungskammer (11) verläuft senkrecht zu der Achse des Zylinders (2). Als Verschluß der Kammer (11) dient ein Artillerie-Schloß (10). Der Generator weist einen Hauptkörper (4) auf, in welchem der Körper (3) der Verbrennungskammer (11) und der Zylinder (2) untergebracht sind, wobei der Zylinder (2) einen auf den aus dem Hauptkörper (4) herausragenden Teil aufgesetzten Kopf (5) aufweist und Schrauben (8) mit zu der Achse (13) des Zylinders (2) parallelen Achsen den Kopf (5) mit dem Hauptkörper (4) über den Zylinder (2) verbinden.

## Generator dynamischer Belastungen mittels Explosivstoffen

Die Erfindung betrifft einen Generator dynamischer Belastungen mittels Explosivstoffen, enthaltend einen Zylinder mit verschiebbarem Kolben und eine Kammer für den Sprengstoff. Der Generator ist zur Erzeugung der am untersuchten Objekt, insbesondere an kompletten Maschinen oder deren Baugruppen, auszuübenden dynamischen Belastungen vorgesehen. Im besonderen ist der Generator zum Ausüben der dynamischen Belastungen an bergbaulichen Ausbauten zwecks Simulation der vom Gebirge stammenden Belastungen vorgesehen, die als Bergschläge bezeichnet werden.

Ein aus der polnischen Patentschrift Nr. P 251 575 bekannter Generator dynamischer Belastungen enthält einen Zylinder, in welchem ein verschiebbarer Kolben untergebracht ist. Im Boden des Zylinders befinden sich Kammern zum Unterbringen des Sprengstoffes. Diese Kammern sind in dem Boden des Zylinders ausgeführt, und zum Einfüllen des Sprengstoffes dient ein enger Verbindungskanal zwischen den Kammern und der Außenfläche des Körpers.

Der genannte Kanal ist schräg ausgeführt, wobei seine Mündung in der Kammer unterhalb seines Auslaufes auf der Oberfläche des Körpers liegt. Auf den Körper des Zylinders wird mittels eines Gewindes ein massiver Anschlag aufgesetzt, der das Herausstoßen des Kolbens aus dem Generator verhindert und zugleich den Kolbenhub beschränkt. Am Kolben ist seitens des Anschlages ein flach endendes Verbindungsstück abgestützt.

Ein Nachteil des aus der polnischen Patentschrift
P 251 575 bekannten Generators besteht in dem beschränkten
Einsatz mit schüttartigen Sprengstoffen. Diese
Beschränkung ergibt sich sowohl aus der Gestalt der
Kammern, die mit Sprengstoff gefüllt werden sollen, sowie
aus der Gestalt und Anordnung des zum Füllen der Kammern
von außen durch Beschütten von Hand vorgesehenen Kanals.
Insbesondere der geringe Durchmesser des Kanals zwingt zum
ausschließlichen Einsatz der schüttartigen Sprengstoffe.
Diese Sprengstoffe sind durch einfache Initiation der
Explosion und kurze Verbrennugszeit und somit durch große
Geschwindigkeit der Detonationswelle gekennzeichnet.
Infolgedessen wachsen die durch die bekannte Vorrichtung
erzeugten dynamischen Belastungen innerhalb einer sehr
kurzen Zeit von einigen Millisekunden an. Dies entspricht
dem tatsächlichen Verlauf eines Bergschlages nicht,
während welches, wie das die seismologischen Messungen
nachgewiesen haben, das Anwachsen der dynamischen
Belastung während einer bis einigen hundertstel Sekunden
andauert. Die bekannte Einrichtung ist demgemäß nicht
fähig, die tatsächlichen Anwachsprozesse der Belastungen
zu simulieren. Die Notwendigkeit der Verwendung der
schüttartigen Sprengstoffe in der bekannten Vorrichtung
bringt einen weiteren Nachteil. Der zum Einfüllen des
Sprengstoffes vorgesehene Kanal weist einen kleinen
Durchmesser auf, der durch Ablagerung von
Verbrennungsrückständen auf der Oberfläche des Kanals noch
vermindert wird. Nach einigen Einsätzen der Vorrichtung
erschwert die Schicht der Verbrennungsrückstände das
Befüllen der Vorrichtung mit Sprengstoffen, wodurch es zum
Verstopfen kommen kann. Die Beseitigung des Sprengstoffes
aus dem verstopften Kanal ist sehr schwierig und extrem
gefährlich. Die Vergrößerung des Durchmessers dieses
Kanals ist in der bekannten Vorrichtug unmöglich, weil das
Abschließen des Kanals für

die Explosionszeit mittels einer geraden Gewindeschraube zum Anwachsen deren Belastungen und Herausreißen durch detonierenden Sprengstoff führen würde. Der wichtigste Nachteil der Einfüllung des Sprengstoffes über einen Kanal mit kleinem Durchmesser besteht in der Unmöglichkeit der Befüllung des Zylinders im Falle eines Versagers. In solchem Falle müßte der mit leicht detonierbarem Sprengstoff befüllte Generator gesprengt werden, was aus Sicherheitsgründen unzulässig ist. Ein weiterer Nachteil der bekannten Vorrichtung besteht in dem Einsatz des massiven monolithischen Körpers des Zylinders mit einem mittels Gewinde verbundenem Anschlag. Eine Beschädigung dieser Baugruppe durch Explosion bewirkt, daß sowohl der massive Zylinder als auch der massive Anschlag nicht mehr verwendbar sind.

Ein weiterer Nachteil der bekannten Vorrichtung besteht auch in der Gestalt des Verbindungsstückes, insbesondere in seiner ebenen Fläche, mit welcher es das untersuchte Element oder die Oberfläche der Stütze berührt. Die unvermeidbare Nichtparallelität von zwei Flächen, zwischen welchen es angeordnet ist, bewirkt, daß auf den Generator die sich aus dieser Nichtparallelität ergebenden Kraftkomponenten wirken, die nch Ansprechen des Generators entstehen, wobei die große Kraft während der Explosion das Herausstoßen des Generators von seiner Einbaustelle bewirken kann. Auch die zu den Kammern gewandte ebene Kolbenfläche ist wegen der Verteilung der Verformungen ungünstig und der massive Kolben ist wegen des Zusammenspieles seiner Fläche mit der Zylinderlaufbahn ungünstig. Unter dem Einfluß der Kräfte und der chemischen Einwirkung der Explosionsgase neigt der Kolben zu lokalen Oberflächenrissen am Außendurchmesser, welche Risse zusammen mit den Verformungen zum Festfressen des Kolbens im Zylinder führen.

In der bekannten Vorrichtung ist der Kolben aus einem einheitlichen Material, im besonderen aus Stahl, ausgeführt. Es wurde festgestellt, daß der Stahl zum Schälen bzw. zum Ablösen auf der Oberfläche unter dem Einfluß der sprungartigen Belastungen während einer Explosion neigt. Durch dieses Ablösen wird die Lebensdauer des Kolbens verkürzt und sein häufiger Austausch notwendig, was kosten- und materialaufwendig ist.

Aufgabe der Erfindung ist es, einen Generator der eingangs genannten Art so weiterzubilden, daß dieser den Einsatzanforderungen voll genügt und daß ohne weiteres dem Anwendungsfall angepaßte Sprengstoffe verwendet werden können.

Das Wesen der Erfindung besteht in der Ausrüstung des Generators mit einer am Ende des Zylinders angeordneten, über den Querumriß des Zylinders hinausreichenden Verbrennungskammer, wobei die Symmetrieachse der Verbrennungskammer zu der Achse des Zylinders senkrecht ist und als Verschluß der Verbrennungskammer ein Artillerie-Schloß verwendet wird.

Der Generator besitzt weiter einen Hauptkörper, in welchem der Körper der Verbrennungskammer und ein leicht austauschbarer einfacher Zylinder angeordnet sind, wobei der Zylinder mit dem Hauptkörper mittels eines Kopfes verbunden ist, der ein einfaches ringförmiges Element bildet. Der Kopf ist mit dem Hauptkörper mittels Schrauben verbunden, deren Achsen zu der Achse des Zylinders parallel verlaufen. Vorzugsweise ist der Zylinder aus mindestens zwei koaxialen Hülsen gebildet, und die Oberfläche des Kolbens ist mit einer Schicht aus einem abriebfesten Material überzogen. Außerdem weist der Kolben

0215204

in einer vorteilhaften Ausführung eine im Inneren ausgebildete, gegenüber der Achse des Zylinders symmetrische Kammer auf. Das Endstück des Kolbens, auf welchem sich die obere Platte des Generators abstützt, endet in einer sphärischen Schüssel, die ein räumliches Gelenk mit der kugelförmigen Nische in der oberen Platte des Generators bildet.

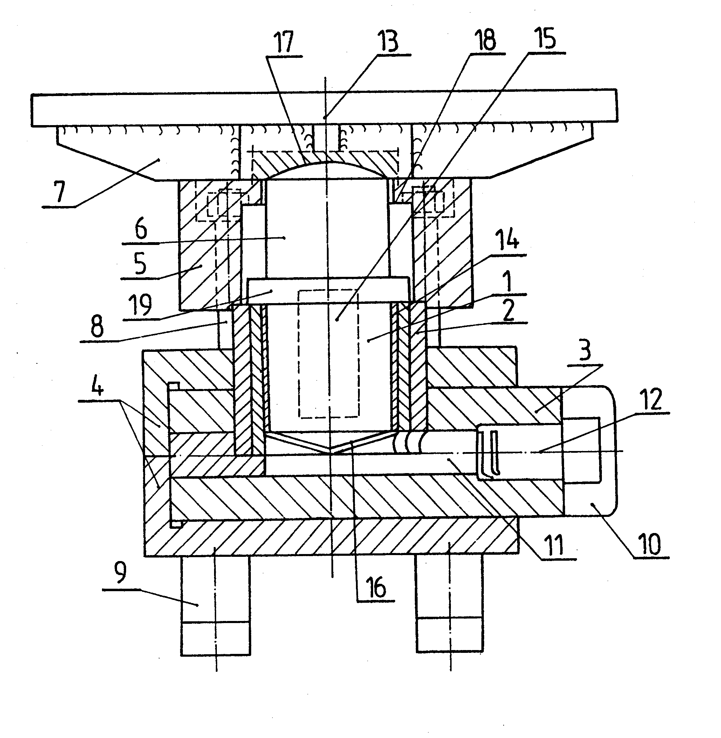

Der Erfindungsgegenstand wird nachstehend anhand eines in der Zeichnung dargestellten Ausführungsbeispieles näher erläutert, wobei die Zeichnung einen Längsschnitt durch den Generator darstellt.

Der Generator dynamischer Belastungen weist einen Hauptkörper 4 auf, in welchem der Körper 3 einer Verbrennungskammer 11 und ein Zylinder 2 untergebracht sind. Der Zylinder 2 ist mehrschichtig und wird durch mindestens zwei koaxiale Hülsen gebildet. Der Zylinder 2 besitzt einen auf den aus dem Hauptkörper 4 herausragenden Teil aufgesetzten Kopf 5, der den Zylinder 2 mit dem Körper 4 mittels Schrauben 8 verbindet, deren Achsen zu der Achse 13 des Zylinders 2 parallel verlaufen. Der Körper 3 der Verbrennungskammer 11 weist eine Symmetrieachse 12 auf, die zu der Symmtrieachse 13 des Zylinders 2 senkrecht verläuft. Die Verbrennungskammer 11 ist durch ein Artillerie-Schloß 10 innen abgeschlossen. Innerhalb des Zylinders 2 verlagert sich der Kolben 1, dessen Außenfläche 14 mit einer Schicht eines Materials überzogen ist, das gegen Abrieb durch Explosionen beständig ist. Seitens der Verbrennungskammer 11 weist der Kolben 1 einen Boden 16 mit sphärischer Fläche, insbesondere mit kugelförmiger Fläche auf, und an der anderen Seite einen Flansch 19 mit dem Endstück 6. Das Endstück 6 des Kolbens 1 endet in einer sphärischen Schüssel 17, auf welcher sich die obere Platte 7 abstützt. Der Kolben 1 weist im Inneren eine hohle Kammer 15 auf, die zu der Symmetrieachse 13 des Zylinders 2 symmetrisch ist. Der Kopf 5 weist einen Vorsprung 18 auf, der den Bewegungsbegrenzer des Kolbens 1 mit dem Flansch 19 darstellt.

Es ist von Vorteil, wenn der Generator auf mindestens einem Ende der Platte 7 eine sphärische, gelenkartige Abstützung aufweist. Eine derartige Abstützung soll auch in bezug auf den Körper 4 vorgesehen sein, an welchem Füße 9 befestigt sind, mittels welcher der Generator auf der Kappe des zu prüfenden Ausbaues gegründet wird. Der Sprengstoff besteht aus einem portionierten Gemisch von Sprengstoffbestandteilen mit entsprechend gewählten Komponenten, damit die erwünschte Kraft und Anwachszeit der Stoßwelle erreicht werden. Ein derartiger Behälter mit portioniertem Sprengstoff wird in die Verbrennungskammer 11 eingesetzt, von innen mit dem Artillerie-Schloß 10 verschlossen, und es wird die Detonation initiiert. Die Explosionskraft kann je nach Inhalt des Behälters mit Sprengstoff geregelt werden.

## Patentansprüche

1.  Generator dynamischer Belastungen mittels
    Sprengstoffen, enthaltend einen Zylinder mit
    verschiebbarem Kolben und eine Kammer zum
    Unterbringen des Sprengstoffes, dadurch
    g e k e n n z e i c h n e t, daß er eine am Ende des
    Zylinders (2) in dem Körper (3) untergebrachte, über
    den Querumriß des Zylinders (2) hinausragende
    Verbrennungskammer (11) aufweist, wobei die
    Symmetrieachse (12) der Verbrennungskammer (11) zu
    der Achse (13) des Zylinders (2) senkrecht verläuft
    und als Verschluß der Kammer (11) ein
    Artillerie-Schloß (10) verwendet wird.

2.  Generator nach Anspruch 1, dadurch gekennzeichnet,
    daß er einen Hauptkörper (4) aufweist, in welchem der
    Körper (3) der Verbrennungskammer (11) und der
    Zylinder (2) eingesetzt sind, wobei der Zylinder (2)
    einen auf den aus dem Hauptkörper (4) herausragenden
    Teil aufgesetzten Kopf (5) aufweist und Schrauben (8)
    mit zu der Achse (13) des Zylinders (2) parallelen
    Achsen den Kopf (5) mit dem Hauptkörper (4) über den
    Zylinder (2) verbinden.

3.  Generator nach Anspruch 2, dadurch gekennzeichnet,
    daß der Zylinder (2) aus milndestens zwei koaxialen
    Hülsen gebildet ist.

4.  Generator nach Anspruch 3, dadurch gekennzeichnet,
    daß die Oberfläche (14) des Kolbens mit einer Schicht
    aus einem Material überzogen ist, das gegen Ablösen
    durch Explosion beständig ist.

5.  Generator nach Anspruch 4, dadurch gekennzeichnet,
    daß der Kolben (1) im Inneren eine Kammer (15)
    aufweist, die symmetrisch gegenüber der Achse (13)
    des Zylinders (2) ausgehöhlt ist.

6.  Generator nach Anspruch 5, dadurch gekennzeichnet,
    daß der Boden (16) des Kolbens (1) eine sphärische,
    insbesondere eine kugelförmige, Fläche aufweist.

7.  Generator nach Anspruch 6, dadurch gekennzeichnet,
    daß das Endstück (6) des Kolbens (1) in einer
    sphärischen Schüssel (17) endet, auf welcher sich die
    obere Platte (7) abstützt.

## EUROPEAN SEARCH REPORT

| | DOCUMENTS CONSIDERED TO BE RELEVANT | | EP 86108593.4 | |
|---|---|---|---|---|
| Category | Citation of document with indication, where appropriate, of relevant passages | Relevant to claim | CLASSIFICATION OF THE APPLICATION (Int. Cl.4) | |
| A | GB - A - 1 085 064 (PLESSEY)<br>* Totality *<br>-- | 1 | G 01 N 3/30 | |
| A | US - A - 4 433 570 (BROWN)<br>* Totality *<br>-- | 1 | | |
| A | US - A - 3 750 457 (PASCQUET)<br>* Totality *<br>---- | 1 | | |
| | | | **TECHNICAL FIELDS SEARCHED (Int. Cl.4)** | |
| | | | G 01 N 3/00 | |

The present search report has been drawn up for all claims

| Place of search | Date of completion of the search | Examiner |
|---|---|---|
| VIENNA | 01-12-1986 | ERBER |